Europäisches Patentamt
European Patent Office
Office européen des brevets

(11) Publication number: 0 227 454
A2

# EUROPEAN PATENT APPLICATION

(21) Application number: 86309982.6

(51) Int. Cl.$^4$: C 08 F 8/00

(22) Date of filing: 19.12.86

(30) Priority: 19.12.85 US 810568 09.06.86 US 871873
26.08.86 US 900773

(43) Date of publication of application:
01.07.87 Bulletin 87/27

(84) Designated Contracting States:
AT BE CH DE ES FR GB GR IT LI LU NL SE

(71) Applicant: COOK PAINT AND VARNISH INC.
1412 Knox Street
Kansas City Missouri 64141 (US)

(72) Inventor: Leonard, David P.
9406 W. 83rd Street
Overland Park Kansas 66204 (US)

Truesdale, James H.
4823 North College Avenue
Kansas City Missouri 64119 (US)

Scherrer, Joseph H.
5726 Floyd Street
Shawnee Mission Kansas 66202 (US)

Wright, Howard J.
6159 Meadowlane Circle
Kansas City Missouri 64118 (US)

(74) Representative: Burford, Anthony Frederick et al
W.H. Beck, Greener & Co. 7 Stone Buildings Lincoln's Inn
London WC2A 3SZ (GB)

## (54) Crosslinked acetoacetic ester polymers.

(57) Cross-linked polymers are obtained by transesterifying an alkyl monofunctional acetoacetate with a polyhydroxy functional monomer or polymer so as to produce a polyacetoacetic functional monomer or polymer and reacting said polyacetoacetic functional monomer or polymer with a poly a, B-unsaturated ester in the presence of a strong base catalyst or in the presence of a organometallic catalyst. The poly a, B-unsaturated ester is formed by reacting crotonic, acrylic, methacrylic, maleic. cinnamic or itaconic acids with polyhydroxy or epoxy functional monomers and polymers.

EP 0 227 454 A2

**Description**

CROSSLINKED ACETOACETIC ESTER POLYMERS

The present invention relates to crosslinked polymers and processes for the manufacture thereof. More particularly, the present invention relates to a cross-linked polymer system resulting from the reaction of acetoacetate esters and α,β-unsaturated esters.

Several disadvantages have been experienced with current ambient and thermosetting compositions and especially those formulated with melamine or urea-formaldehyde resins since during the curing cycle toxic volatiles, including free formaldehyde evolve. These compositions are generally cured at elevated temperatues, i.e. at about 275°F (135°C) or higher. It has also been observed that while the use of isocyanates offers excellent cure at lower temperatures, i.e. from ambient temperature to about 250°F (120°C), nonetheless isocyanates are very toxic and compositions containing them, when cured at ambient or room temperature. produce undesirable side reactions, especially if moisture is present. Epoxy resin containing compositions can cure over a wide temperature range depending upon the type of curing agent employed. However, curing agents for epoxy resins are often very toxic and act as sensitizers to humans. Moreover, their exterior durability is unsatisfactory, limiting their use generally to primer applications.

The present invention relates to a process for producing a cross-linked polymer. The process comprises transesterifying an alkyl acetoacetate with a polyhydroxy functional monomer or polymer in the presence or not of a catalyst and reacting the thus formed acetoacetic functional monomer or polymer with a polyfunctional α,β-unsaturated ester in the presence of a strong base catalyst or an organometallic catalyst. The present invention also relates to the cross-linked polymers produced by this process.

It has now been found that the disadvantages associated with other crosslinking systems can be avoided by the practice of the present invention which provides a crosslinking composition which is curable not only without the production of any toxic by-products and also at low temperatures, i.e. ambient temperature to about 350°F (175°C) without adverse side reactions. At elevated temperatures, satisfactory cures can be obtained in the shortest time. An advantageous elevated curing temperature range is from about 180°F to 300°F (80°-150°C). The quality of coatings produced using the crosslinked compositions of the present invention is similar to that of current coatings in primer application or high durability top coats. The crosslinked compositions of the present invention, when used as a coating composition, also can offer the advantage of being compliance coatings which meet the current United States Environmental Protection Agency's (EPA) VOC (volatile organic compound) regulations. Coatings or films produced using the crosslinked compositions of the present invention exhibit excellent adhesion, excellent solvent resistance, excellent gloss retention, good flexibility and excellent hardness. These properties are achieved when the polymer system is coated over numerous substrates such as chromate treated aluminum, zinc and iron phosphate treated steel and various plastics such as polyamides, polycarbonates, ABS, and polyphenylene oxide.

Polymers prepared from the composition of the present invention are useful as coatings for farm implements, automotive top coats, primers, aluminum extrusions, office furnishings and wood products. Industries having a use for such coatings have been in need of a high quality, non-toxic, low temperature cure coating meeting the EPA's VOC regulations. The present invention fulfills such a need.

The present invention provides both a method for preparing the acetonacetate ester and poly α,β-unsaturated ester components for a polymer as well as the crosslinked polymer itself.

The process for producing the crosslinked polymer comprises transesterifying an alkyl monofunctional acetoacetate with a polyhydroxy functional monomer or polyhydroxy functional polymer in the presence or not of a catalyst so as to produce a polyacetoacetic functional monomer or a polyacetoacetic functional polymer and, subsequently, reacting the thus formed acetoacetic functional monomer or polymer with an α,β-unsaturated material in the presence of a strong base catalyst or, in accordance with another embodiment of the present invention, in the the presence of an organo metallic catalyst.

Films produced in accordance with the present invention exhibit good hardness, excellent solvent resistance, excellent adhesion, excellent flexibility, and excellent gloss retention after accelerated exposure. Advantageously, coatings using the present novel systems can be formulated with very low volatile organic contents as to comply with EPA regulations.

In one embodiment of the present process, one reaction involved is known as the Michael Reaction. The Michael Reaction is described in Mechanism and Structure in Organic Chemistry, (E.S. Gould, p. 392-394; Holdt Rinehard and Winston, New York, 1959.) In general, in the Michael Reaction an acetoacetic ester material forms a carbanion in the presence of a strong base. The carbanion then reacts with the α,β-unsaturated carbonyl compound.

In the present process, the reaction can be conducted with stoichiometric amounts, or a slight excess, of the polyacetoacetic functional compounds relative to the poly α,β-unsaturated materials. Advantageously, and thus preferably, an excess of the acetoacetic functional compound(s) is (are) used so as to ensure a complete reaction with the poly α,β-unsaturated material. The stoichiometric excess ensures a complete reaction which prevents a coating produced from the present composition from having undesired yellowing and decreased exterior coating durability. The ratio of the polyacetoacetic functional compound(s) to the poly α,β-unsaturated crosslinking compound(s) is from 0.50 - 1.50 to 1.5 - 0.50 and more advantageously is from about 1.0:1.0 to about 1.0:0.8.

In the first step of the process embodiment of the invention, poly acetoacetic functional materials are obtained by a transesterification reaction between (a) an alkyl monofunctional acetoacetate and (b) a polyhydroxy functional monomer or polymer and the presence or not of a catalyst. Alkyl monofunctional acetoacetate esters suitable for transesterification are methyl acetoacetate, ethyl acetoacetate, isopropyl acetoacetate, butyl acetoacetate, t-butyl acetoacetate, methyl benzyl acetoacetate and dodecyl acetoacetate.

Suitable polyhydroxy functional monomers and polymers are, for instance, 1,6-hexanediol, neopentyl glycol, ethylene glycol, cyclohexanedimethanol, diethylene glycol, 1,4-butanediol, trimethylol propane, trimethylol ethane, glycerine, a hydroxy functional acrylic resin (α-methyl styrene/hydroxyethyl acrylate modified with E-caprolactone (Union Carbide's TONE 100®)/2-ethylhexyl acrylate with weight ratios of 35/55/10 respectively and a styrene/allyl alcohol copolymer (Monsanto RJ-100).

Additionally, acetoacetic functional ester materials suitable for use herein include the reaction products of an alkyl monofunctional acetoacetate with epoxy resins and their esters, oil free polyester and alkyd resins, and acrylic resins. Suitable epoxy resins are available from Shell Chemical such as EPON 1001®. An exemplary acetoacetic functional alkyd can be obtained by for example, reacting tall oil fatty acid, benzoic acid, phthalic anhydride and pentaerythritol to obtain an intermediate and thereafter reacting the intermediate with an alkyl monofunctional acetoacetate. If a catalyst is used in the transesterification stage of the process embodiment of the present invention, suitable ones include, methyl sulfonic acid, paratoluene sulfonic acid, sodium methoxide and dibutyl tin oxide.

The acetoacetic functional materials thus comprise acetoacetic functional resins and oligomers with functionality of two or more.

Exemplary poly α,β-unsaturated materials useful in the present invention include, for instance, polyfunctional methacrylate, acrylate, cinnamate and crotonate functional oligomers and polymers as well as maleate and itaconate modified resins. Exemplary suitable poly α,β-unsaturated materials include 1,6-hexanediol diacrylate, trimethylolpropane triacrylate, trimethylolpropane trimethacrylate, maleic modified polyesters, itaconic modified polyesters and acrylics, crotonic acid modified acrylics and trimethylolpropane tricinnamate. An exemplary maleic modified polyester has a maleic anhydride to propylene glycol molar ratio of 1.0/1.1 and is reduced to 60% nonvolatiles in methyl amyl ketone. An exemplary suitable crotonic acid modified acrylic is obtained by reacting crotonic acid with an acrylic resin containing glycidylmethacrylate (GMA)/butyl acrylate (BA)/methyl methacrylate (MMA)/styrene(s) in weight ratios respectively of 25/25/20/30 and has a 60% nonvolatiles content in xylene. An exemplary acrylate functional acrylic resin may be obtained by reacting acrylic acid with a glycidyl methacrylate/ butyl acrylate/styrene/methyl methacrylate/copolymer with a weight ratio of 25/25/30/20.

Of the disclosed unsaturated compounds, the crotonate and itaconate compounds are preferred. Compounds exhibiting the most advantageous cure responses may be characterized by the following formula:

$$R - CH = \overset{\displaystyle R^1}{\overset{|}{C}} - \overset{\displaystyle O}{\overset{||}{C}} - O -$$

wherein the formula:
R represents, independently, H or methyl,

or $-\overset{O}{\overset{||}{C}}-O$ and
$R^1$ represents, independently, H or

$-CH_2-\overset{O}{\overset{||}{C}}-O-$ or $-CH_3$

In the second step of the present process, the acetoacetic functional ester material and the poly α.β-unsaturated crosslinker are reacted in the presence of a catalyst. In one embodiment of the present invention, the catalyst is preferably a strong base. Examples of suitable catalyst of this type are, for instance, alcoholic sodium or potassium hydroxide, tetrabutyl ammonium hydroxide, dimethyl ethanol amine, ammonia and triethylamine. The amount of strong base catalyst employed in this embodiment of the present process will range, for example, between about 0.5% and about 5% based on total resin solids. The amount of catalyst and the catalyst type used will depend on the reactivity of the acetoacetic group with the α,β-unsaturated material, whether an air dry or bake system is used as well as the time and temperature of bake cycle.

Examples of suitable organometallic compounds include 2-ethyl hexanoates or octoate of lead, cobalt, manganese, zinc, calcium, iron, zirconium, lanthanum, chromium, potassium and vanadium; naphthenates of lead, cobalt, manganese, zinc, calcium, iron, potassium and cerium; tallates of lead, cobalt, manganese, calcium, and iron; and the neodecanoates, isononanoates and heptanoates of calcium, cobalt, lead, manganese, zinc, zirconium and iron, or mixtures thereof. Also included are metallic acetoacetonates of manganese (II), (III), cobalt (II), (IV), chromium, lead, potassium, etc. and mixtures thereof.

The amount of catalyst employed in the present process will range, for example, between about 0.20% and about 0.80%, and preferably between about 0.04% to 0.25%, based on total vehicle solids. The amount of

catalyst and the catalyst type used will depend on the reactivity of the acetoacetic group with the α,β-unsaturated ester material whether an air dry or bake system is used, as well as the time and temperature of bake cycle.

The curing step may be conducted between room temperature and 250°F - 350°F (120°-175°C). Advantageously, the curing step is conducted at an elevated temperature because elevated temperatures give the most satisfactory cure in the shortest time. An advantageous elevated curing temperature range is from about 180°F to about 350°F (80-175°C).

Electroconductive enamels and coatings can be prepared from the polymer embodiment of the present invention. Such enamels and coatings can be rendered electroconductive by including sufficient quantities of a conductive filler such as carbon black.

The following non-limiting examples illustrate the present invention. Examples I-VII illustrate exemplary acetoacetic functional polymers and monomers as well as the process for preparing the same.

Example I

A three liter reaction vessel equipped with a thermometer, an inert gas delivery tube, a Barrett distilling receiver and a water condenser, is charged with 510 grams of trimethylol propane, 1,482 grams of ethyl acetoacetate and 8 grams of sodium methoxide or paratoluene sulfonic acid. The mixture is heated under a light nitrogen blanket to 92°C at which point ethanol starts to distill over. The temperature increases as the ethanol is removed to a maximum of 135°C. The nitrogen blanket is replaced by a nitrogen blow to remove the last traces of ethanol. The total ethanol collected was 95% of theoretical. The product, trimethylolpropane triacetoacetate, has a Z6+ Gardner-Holdt viscosity at 100% nonvolatiles and an equivalent weight of 129.

Example II

Hexanediol diacetoacetate was prepared by the method as described in Example I. 622 grams of 1,6-hexanediol were reacted with 1,376 grams of ethyl acetoacetate without a transesterification catalyst or, alternatively, in the presence of 2g of paratoluene sulfonic acid. The resulting product has an A- Gardner-Holdt viscosity at 100% nonvolatiles and has a equivalent weight of 143.

Example III

The acetoacetic ester of a styrene/allyl alcohol copolymer (Monsanto RJ-100) having a hydroxyl equivalent weight of 300+15 was prepared by the same procedure as in Example I. After the acetoacetic ester was prepared, it was reduced to 70% nonvolatiles in 67/33 blend of xylene/methyl isobutyl ketone respectively. The resulting acetoacetic ester has a viscosity of Z6+ and has an equivalent weight of 400 on a solids basis.

Example IV

960 grams of tall oil fatty acid and 1,599 grams of Shell Chemical's EPON 1001® are reacted together in a five liter reaction flask equipped with an agitator, a water condenser, a Barrett distilling receiver, a thermometer and a nitrogen sparge tube. The reactants are heated to 200-210°C under a nitrogen blow and held at this temperature until an acid number of less than ten is reached.

The resulting epoxy ester is cooled to 145°C and 1,003 grams of ethyl acetoacetate and 3 grams paratoluene sulfonic acid are added. The ethyl acetoacetate is transesterified and ethanol is collected as in Example I. The resin, reduced to 80% nonvolatiles in methyl amyl ketone, has a Z6+ viscosity and an equivalent weight of 514 on a solids basis.

Example V

A five liter reaction flask, equipped with a steam fractionating condenser, a thermometer, an agitator and a nitrogen sparge tube, was charged with 903 grams of neopentyl glycol, 180 grams of trimethylolethane, 264 grams of adipic acid, 1,206 grams of isophthalic acid and 3 grams of dibutyltin oxide. The temperature was gradually increased to 230°C maximum. The resin was processed to an acid number of less than ten and a U-V viscosity at 60% nonvolatiles in xylene.

After the polyester base was completed, the resin was cooled and reduced in 400 grams of methyl amyl ketone. At 130°C, 400 grams of ethyl acetoacetate and 3 grams of dibutyl tin oxide or, alternatively, 3 grams of paratoluene sulfonic acid were added to the polyester. The steam condenser was replaced with a water condenser and a Barrett distilling receiver.

The ethanol was removed by the same procedure as given in Example I. The acetoacetate functional polyester has a Z6+ viscosity at 86% nonvolatiles and has an equivalent weight of 932 on a solids basis.

Example VI

An acetoacetic functional alkyd was prepared by first reacting 537 grams of tall oil fatty acid, 216 grams of benzoic acid, 484 grams of phthalic anhydride and 454 grams of pentaerythritol. The resin was prepared in equipment as described in Example I. Ninety (90) grams of xylene were added to help remove the water of esterification. The resin was cooked to a 15-20 acid number and an E-F viscosity at 40% nonvolatiles in xylene. The maximum reaction temperature during this stage was 200°C.

The resin was then cooled to 150°C and 1,200 grams of ethyl amyl ketone, 307 grams of ethyl acetoacetate and 2.0 grams of paratoluene sulfonic acid were added. The ethyl acetoacetate was transesterified onto the

alkyd. The ethanol was removed through the Barrett receiver. The procedure was the same as in Example I. The resulting modified alkyd has a Y-Z viscosity at 60% nonvolatiles and an equivalent weight of 846 on a solids basis.

Example VII

An acetoacetic functional acrylic was prepared by first preparing a hydroxy functional acrylic. This was performed by reacting 172 grams of styrene, 542 grams of butyl methacrylate, 343 grams of butyl acrylate, 570 grams of hydroxyethyl acrylate and 116 grams of cumene hydroperoxide in refluxing methyl amyl ketone (1,085 grams) and cumene hydroperoxide (28 grams). The monomers and catalyst were added simultaneously and continuously over four hours to the refluxing solvent. The reaction was performed in a five liter reactor equipped with an agitator, and addition funnel, a thermometer, a Barrett distilling receiver and water condenser. After the monomers were added, the resin was held at a reflux temperature of 143∓3°C until a terminal viscosity of D-E was reached.

The resulting acrylic resin was then cooled to 100°C at which point 640 grams of ethyl acetoacetate and 4 grams of paratoluene sulfonic acid were added. The transesterification by-product, ethanol, was removed through the Barrett receiver as described in Example I. The final product has a D-E viscosity at 58% nonvolatiles in methyl amyl ketone and an equivalent weight of 410 on a solids basis.

Examples VIII-XVIII

Examples VIII to XVIII illustrate exemplary pigmented coatings prepared from the acetoacetic functional polymers of Examples I to VII.

Example VIII

A gloss white enamel was formulated with a PVC content of 16% and at a volume solids of 52%.

The acetoacetic functional ester material, prepared according to Example I, was reacted with an acrylate functional acrylic resin as the α,β-unsaturated crosslinker. The copolymer GMA/acrylic acid (AA)/BA/Styrene (S)/MMA-22.1/11.2/22.1/26.8/17.8 weight ratio respectively, 59% nonvolatiles in xylene was reacted at a stoichiometric ratio of 1:1. The reaction was conducted in the presence of tetrabutyl ammonium hydroxide catalyst, 2% level based on vehicle solids content and then baked for 30 minutes at 250°F (120°C) on a substrate composed of treated cold rolled steel. Thereafter, the resulting white enamel was evaluated and had the following properties:

Gloss - 94/60°, 60/20°,
Pencil Hardness - 2H,
Solvent Resistance - 100+ MEK double rubs and
Crosshatch Adhesion -taped 100% retention.

Example IX

A gloss white enamel was formulated with a PVC content of 16% by a volume solids of 52%. This system can be tinted with a commercial tinting system.

The acetoacetic functional ester material, prepared according to Example II, was reacted with, as the α,β-unsaturated crosslinker, the acrylate functional acrylic resin of Example VII at a stoichiometric ratio of 1:1. The reaction was conducted in the presence of tetrabutyl ammonium hydroxide catalyst, 2% based on a vehicle solids content. The gloss white enamel was baked for 30 minutes at 250°F (120°C) on a treated cold rolled steel substrate. After baking, the enamel was evaluated and exhibited the following properties:

Gloss - 98/60°, 77/20°,
Pencil Hardness - H-2H,
Solvent Resistance - 100+ MEK double rubs, and
Crosshatch Adhesion - taped 100% retention.

A second portion of the above gloss white enamel was baked for 60 minutes at 180°F (80°C) on treated cold rolled steel substrate. After baking, the white enamel was evaluated and exhibited the following properties:

Gloss - 94/60°, 82/20°,
Pencil Hardness - H,
Solvent Resistance - 50 MEK double rubs and
Crosshatch Adhesion -taped 100% retention.

Example X

A conductive dark gray epoxy ester primer for metal and plastic was prepared as follows. This coating was formulated with an active PVC of 21.87% (conductive carbon black and titanium dioxide) and a total PVC of 42.9%.

The acetoacetic ester, prepared in accordance with Example IV, was reacted with, as the α,β-unsaturated crosslinker, trimethylolpropane triacrylate at a stoichiometric ratio of 1:1, in the presence of a tetrabutyl ammonium hydroxide catalyst, at a 2% level based on vehicle solids content.

Thereafter, a portion of the primer was baked for 30 minutes at 250°F (120°C) on treated cold rolled steel, nylon and polycarbonate.

The resulting primer exhibited the following characteristics:

Pencil Hardness - B+ initially, H in 72 hours, and
Solvent Resistance - 35 MEK double rubs initially, 50+ in 72 hours.

A second portion of the primer was baked for 22 minutes at 340°F (170°C) on treated cold rolled steel. The resulting primer exhibited the following properties:
Pencil Hardness - H initially, 2H in 72 hours, and
Solvent Resistance - 60 MEK double rubs initially, 100+ in 72 hours.

Example XI

A polyester gloss white enamel was formulated with a PVC content of 18% at a volume solids of 40%. The acetoacetic ester, prepared in accordance with Example V, was reacted with, as the α,β-unsaturated crosslinker, trimethylolpropane triacrylate, at two different stoichiometric ratios. The two reaction products were cured to prepare two different polyester gloss white enamels. Each polyester gloss white enamel was thereafter baked and evaluated as follows.

(a) The first crosslinked polymer was prepared at an acetoacetic ester: acrylate functional crosslinker stoichiometric ratio of 1:0.80 in the presence of a tetrabutyl ammonium hydroxide catalyst, 2% on vehicle solids. The enamel prepared from the polymer was baked for 30 minutes at 250°F (120°C) on treated cold rolled steel and exhibited the following properties
Gloss - 95/60°, 85/20°,
Pencil Hardness - F-H,
Solvent Resistance - 50 MEK double rubs and
Crosshatch Adhesion - taped 100% retention.

(b) The second crosslinked polymer was prepared at an acetoacetic ester: acrylate functional crosslinker stoichiometric ratio of 1:0.60 in the presence of a tetrabutyl ammonium hydroxide catalyst, 2% of vehicle solids. The enamel prepared from the crosslinked polymer was baked for 30 minutes at 250°F (120°C) on treated cold rolled steel. The baked enamel had the following properties:
Gloss - 92/60°, 74/20°,
Pencil Hardness - H,
Solvent Resistance - 50 MEK double rubs and
Crosshatch Adhesion - taped 100% retention.

Example XII

A gloss white enamel was formulated with a PVC content of 16% and a volume solids of 44%.

The acetoacetic ester, prepared in accordance with Example III, was reacted with, as the α,β-unsaturated crosslinker, trimethylolpropane triacrylate, at a stoichiometric ratio of 1:1 in the presence of a tetrabutyl ammonium hydroxide catalyst at a 2% level of vehicle solids content. The thus prepared crosslinked polymer was air dry cured for 96 hours on treated cold rolled steel.

The resulting enamel was evaluated and exhibited the following characteristics:
Gloss - 92/60°, 74/20°,
Pencil Hardness - 2H,
Solvent Resistance - 50 MEK double rubs 68 hours, 100 MEK double rubs 96 hours, and
Crosshatch Adhesion - taped 100% retention.

Example XIII

A gloss white acrylic enamel was formulated with a PVC content of 20% at a volume solids of 45.5%. The acetoacetic ester, prepared in accordance with Example II, was reacted with, as the α,β-unsaturated crosslinker, crotonate functional acrylic resin, at a stoichiometric ratio of 1:0.80 in the presence of tetrabutyl ammonium hydroxide at 2% level on vehicle solids content. The crosslinker may be further indentified as GMA/BA/S/MMA/crotonic acid with weight ratios, respectively, of 21.7/21.7/26.0/17.4/13.2 at 60% nonvolatiles in xylene. Ths thus prepared crosslinked polymer was baked for 30 minutes at 250°F (120°C) on cold rolled steel.

The resulting enamel was evaluated and exhibited the following properties:
Gloss - 88/60°, 62/20°,
Pencil Hardness - F-H,
Solvent Resistance - 50 MEK double rubs and
Crosshatch Adhesion - taped 100% retention.

Example XIV

A gloss white acrylic enamel was formulated with a PVC content of 20% at a volume solids of 45.5%. The acetoacetic ester, prepared in accordance with Example VII, was reacted with, as the α,β-unsaturated crosslinker, the crotonate functional acrylic of Example XIII, at a stoichiometric ratio of 1:0.80 in the presence of a tetrabutyl ammonium hydroxide catalyst, 5% of vehicle solids. The resulting crosslinked polymer was baked for 30 minutes at 250°F (120°C) on treated cold rolled steel. The resulting enamel was evaluated and exhibited the following properties:
Gloss - 94/60°, 86/20°,
Pencil Hardness - H

Solvent Resistance - 50 MEK double rubs and
Crosshatch Adhesion - taped 100% retention.

Example XV

A gloss black enamel was formulated with a PVC content of 3.27% at a volume solids of 51%.

The acetoacetic ester, prepared in accordance with Example VII, was reacted with, as the α,β-unsaturated crosslinker, methacrylate functional acrylic resin, at a stoichiometric ratio of 1:0.80 in the presence of tetrabutyl ammonium hydroxide catalyst, 5% of vehicle solids. The methacrylate functional acrylic resin is further characterized as follows: GMA/MAA/BA/S/MMA with, respectively, 21.7/13.2/21.7/26.0/17.5 weight ratios, 60% nonvolatiles in xylene. The resulting crosslinked polymer was baked for 15 minutes at 250°F (120°C) on treated cold rolled steel. The resulting enamel exhibited the following properties:
Gloss - 89/60°, 82/20°,
Pencil Hardness - B+
Solvent Resistance - 17 MEK double rubs initial and 25 MEK double rubs overnight, no solvation, and
Crosshatch Adhesion - taped 100% retention.

Example XVI

A clear acrylic enamel was formulated at 40% volume solids content.

The acetoacetic ester, prepared in accordance with Example II, was reacted with the methacrylate functional acrylic of Example XV, at a stoichiometric ratio of 1:0.80 in the presence of tetrabutyl ammonium hydroxide catalyst, 5% on vehicle solids. The resulting crosslinked polymer was baked for 30 minutes at 250°F (120°C) on treated cold rolled steel. The enamel had the following properties:
Pencil Hardness - H, and
Solvent Resistance - 50 MEK double rubs.

Example XVII

A gloss white enamel was formulated with a PVC content of 18% at a volume solids of 50%.

The acetoacetic functional ester material, prepared according to Example I was reacted with an itaconate functional polyester resin as the α,β-unsaturated crosslinker. The itaconate polyester was prepared by reacting itaconic acid with propylene glycol on a 1:1.1 molar ratio respectively. The resin was dissolved in methyl amyl ketone to obtain 60% nonvolatiles.

The acetoacetic ester and the unsaturated crosslinker were blended at a 1:1 stoichiometric ratio. The reaction was catalyzed with tetrabutyl ammonium hydroxide, 2% on total vehicle solids. The coating was baked for 20 minutes at 250°F (120°C) on treated cold rolled steel. The resulting white enamel was evaluated and had the following properties:
Gloss 90/60°, 72/20°
Pencil Hardness - B-HB
Solvent Resistance - 50 MEK double rubs and
Crosshatch Adhesion - taped 100% retention.

Example XVIII

A gloss white enamel was prepared similar to Example I except the catalyst, tetrabutyl ammonium hydroxide was omitted. The coating was sprayed onto a panel of treated cold rolled steel.

After air drying at room temperature for 30 minutes to remove the solvent, the panel was inverted over an open eight ounce jar of dimethyl amino ethanol. In this arrangement, part of the film was exposed to the vapors of the amine and part of the film was not. After remaining in this condition for twelve hours the film was evaluated for cure by determining solvent resistance with methyl ethyl ketone. The results of the evaluation are as follows:
Unexposed film - 0 double rubs of MEK -film solvated
Exposed film - 25 double rubs of MEK - no solvation

Example XIX

This example relates to the evaluation of additional unsaturated materials suitable for use in the instant process to produce crosslinked polymers in accordance with the present invention.

Trimethylolpropane triacetoacetate was used to evaluate the reaction with various forms of carbon-carbon unsaturation. The acetoacetate ester and the unsaturated materials were blended one to one on an equivalent basis. The blend was then catalyzed with 1% (on total solids) of a 25% alcoholic potassium hydroxide solution. The mixtures were placed in a 250°F (120°C) oven for one hour and evaluated for gellation. Gellation is the physical change in the acetoacetate/α,β-unsaturated ester blend where the blend goes from a liquid state to a solid or semi-solid state. The results of these tests are given in Table I:

TABLE I

| | | |
|---|---|---|
| (1) | trimethylolpropane triacrylate | gelled |
| (2) | trimethylolpropane trimethacrylate | gelled |
| (3) | Maleic modified polyester (a) | gelled |
| (4) | itaconate modified polyester (b) | gelled |
| (5) | crotonic acid modified acrylic (c) | gelled |
| (6) | trimethylolpropane tricinnamate | gelled |

(a) Maleic anhydride/propylene glycol 1.0/1.1 molar ratio reduced to 60% nonvolatiles in methyl amyl ketone.

(b) itaconic acid/propylene glycol 1.0/1.1 molar ratio reduced to 60% nonvolatiles in methyl amyl ketone.

(c) GMA/BA/S/MMA/Crotonic acid - 21.7/21.7/26.0/17/4/13.2 weight ratio respectively - 60% nonvolatiles in xylene.

The gellation of these blends indicate that the trimethylol propane triacetoacetate will react and crosslink with the various forms of $\alpha,\beta$-unsaturated ester materials.

Examples XX-XXIII illustrate exemplary coatings prepared from the acetoacetic functional polymers of Examples I to VII in the presence of an organometallic catalyst.

Example XX

A stock mixture of hexanediol diacetoacetate from Example II and an acrylate functional acrylic resin was prepared. The acrylate functional acrylic resin was prepared by reacting acrylic acid on to a glycidyl methacrylate functional acrylic containing a 25/25/30/20 weight ratio of glycidyl methacrylate/butyl acrylate/sytrene/methylacrylate respectively. The acrylate equivalent weight base on 100% nonvolatile is 640. The stoichiometric ratio of the reactants is 1.0:1.0 on solids. Films of each mixture were prepared on cold rolled steel and baked for 15 to 30 minutes at 250°F and 300°F (120°C and 150°C). The resulting films had the properties set forth in the following table.

The reverse impact referred to in the table is a measurement of the adhesive quality of the coated system. It is measured generally by dropping a known weight from a given height onto the side of a substrate (generally metal) opposite to that which has been coated with the crosslinked polymer. Failure is noted when the coating covering the resultant dimple in the substrate exhibits a star-like crack. The quantity in which the failure is measured is the product of the height and weight causing the failure.

| Catalyst | Bake Schedule* | Solvent Resistance MEK Double Rubs | Pencil Hardness | Reverse Impact In.Lbs (Cm.Kg.) |
|---|---|---|---|---|
| a) Control, no catalyst | 30'x250°F | Solvates | <6B | --- |
| b) Cobalt Naphthenate 0.12% Co | 30'x250°F | 50 | HB-F | 20 (23) |
| c) Cerium Naphthenate 0.12% Ce | 30'x250°F | 50 | HB-F | 20 (23) |
| d) Calcium Octoate 0.12% Ca | 30'x250°F | 35 | HB | 20 (23) |
| e) Lithium Neodecanoate 0.04% Li | 15'x250°F | 50 | F | 50 (58) |
| f) Iron Octoate 0.12% Fe | 15'x250°F | 50 | B | 20 (23) |
| g) Manganese Octoate 0.06% Mn | 15'x250°F | 25 | B | 20 (23) |
| h) Manganese Octoate 0.12% Mn | 30'x250°F | 50 | H | 20 (23) |
| i) Manganese Octoate 0.18% Mn | 15'x250°F | 50 | HB-F | 20 (23) |
| j) Lanthanum Octoate 0.23% La | 30'x250°F | 50 | H | 20 (23) |
| k) Lead Octoate 0.12% Pb | 30'x250°F | 50 | F | 20 (23) |

| Catalyst | Bake Schedule * | Solvent Resistance MEK Double Rubs | Pencil Hardness | Reverse Impact In.Lbs (Cm.Kg.) |
|---|---|---|---|---|
| l) Chrome Octoate 0.12% Cr | 30'x300°F | 20 | 2B | 20 (23) |
| m) Vanadium Octoate 0.08% V | 30'x300°F | 50 | HB | 20 (23) |
| n) Manganese (III) Aceto acetonate 0.12% Mn | 30'x300°F | 50 | H | 20 (23) |
| o) Cobalt (II) Acetoacetonate 0.12% Co | 30'x300°F | 50 | HB | 20 (23) |

* 250°F = 120°C; 300°F = 150°C

The following example demonstrates the cure and film properties of a gloss black enamel using the coating system in Example VIII and cured with several different metallic carboxylates.

Example XXI

A gloss black enamel coating was formulated with the acetoacetic ester/acrylate functional blend as given in Example VIII. The coating was formulated with an active PVC of 3.8% at a volume solids of 52%. Various metal carboxylates were added to samples of this paint at a level of 0.06% metal based on vehicle solids. The paint was sprayed onto cold rolled steel and baked for fifteen minutes at 250°F (120°C). The test results of these paint systems are given.

| Catalyst | Solvent Resistance-MEK Double Rubs | Crosshatch Adhesion Taped | Gloss 60°/20° | Pencil Hardness |
|---|---|---|---|---|
| a) Control, no catalyst | Solvates | 0 | 87/69 | <6B |
| b) Potassium Octoate | 50 | 100% | 87/63 | F |
| c) Lithium Neodecanoate | 50 | 100% | 88/74 | HB |
| d) Cerium Naphthenate | 50 | 100% | 87/71 | 2H |
| e) Manganese Octoate | 50 | 100% | 88/79 | 2H |
| f) Cobalt Naphthenate | 50 | 100% | 87/71 | H |

Example XXII

A stock mixture of hexanediol diacetoacetate and a crotonate functional acrylic, was prepared.

The hexanediol diacetoacetate was prepared by the method described in Example II which was then reacted with crotonate functional acrylic resin as the poly α,β-unsaturated ester crosslinker, the stoichiometric ratio of the reactants being 1.0:1.0 on a solids basis. The crotonate functional acrylic resin is the reaction product of crotonic acid with a glycidyl methacrylate/butyl acrylate/styrene/methyl methacrylate copolymer having a weight ratio of 25/25/30/20 respectively. In the control sample (a), no catalyst was added. In samples (b), (c), and (d), below, prepared in accordance with the present invention, the catalyst was lithium neodecanoate, manganese octoate and vanadium octoate, respectively.

Films were prepared on cold rolled steel and baked for 30 minutes at 300°F (150°C). The resulting film properties are given.

| Catalyst | Bake Schedule * | Solvent Resistance MEK Double Rubs | Pencil Hardness | Reverse Impact In.Lbs (Cm.Kg.) |
|---|---|---|---|---|
| a) Control, no catalyst | 30'x300°F | Solvates | <6B | --- |
| b) Lithium Neo-decanoate 0.4% Li | 30'x300°F | 50 | HB | 20 (23) |
| c) Manganese Octoate 0.12% Mn | 30'x300°F | 50 | F | 20 (23) |
| d) Vanadium Octoate 0.08% V | 30'x300°F | 50 | F | 20 (23) |

* 300°F = 150°C

It has also been found that by adding an oxime compound to the system the pot life can be extended or stabilized from several hours to several weeks. Examples of oxime compounds are methyl ethyl ketoxime and butyraldoxime. The level of the oxime compound can vary from 0.05-0.50% on vehicle solids. The following example demonstrates the pot life extension and the effect on film properties.

Example XXIII

The acetoacetic crosslinker and acrylate functional resin as in Example VIII were used. One sample was catalyzed with manganese octoate (0.12% metal on vehicle solids). A second sample was catalyzed in the same manner except 0.50% methyl ethyl ketoxime was added based on vehicle solids.

The following results were obtained:

| | Stability 27°C | Cure Schedule * | Solvent Resistance MEK-DR | Pencil Hardness | Reverse Impact In.Lbs (Cm.Kg.) |
|---|---|---|---|---|---|
| a) Manganese Octoate 0.12% Mn | 15 hr. | 15'X300°F | 50 | H | 20 (23) |
| b) Manganese Octoate 0.12% Mn 0.50% Methyl Ethyl Ketoxime | 40 days | 15'X300°F | 50 | H | 20 (23) |

* 300°F = 150°C

Stability is the time from which the example is catalyzed with the organometallic compound to the time it is gelled solid.

## Claims

1. A process for preparing a crosslinked polymer characrerised in that a polyacetoacetic functional monomer or polymer obtained by transesterifying an alkyl monofunctional acetoacetate with a polyhydroxy functional monomer or a polyhydroxy functional polymer is reacted, in the presence of a strong base catalyst effective to initiate a Michael Reaction or in the presence of an organometallic compound, with a poly a,B-unsaturated ester obtained by reacting a crotonic, acrylic, methacrylic, maleic or itaconic acid with a polyhydroxy or epoxy functional monomer or polymer, or a mixture thereof.

2. A process as claimed in Claim 1, wherein said strong base is selected from lithium hydroxide, sodium hydroxide, potassium hydroxide, tetramethylammonium hydroxide, tetrabutyl ammonium hydroxide, benzyl trimethyl ammonium hydroxide, dimethyl ethanol amine, ammonia, triethylamine, and mixtures thereof.

3. A process as claimed in Claim 1, wherein said organometallic compound is a carboxylate selected from (1) the 2-ethyl hexanoates or octoates of lead, cobalt, manganese, zinc, calcium, iron, zirconium, lanthanum, chromium, potassium or vanadium; (2) the naphthenates of lead, cobalt, manganese, zinc, calcium, iron, potassium or cerium; (3) the tallates of lead, cobalt, manganese, calcium or iron; (4) the neodecanoates of calcium, balt, manganese, lead, zinc, zirconium or iron; (5) the isononoates of calcium, cobalt, lead manganese, zinc, zirconium or iron (6) the heptanoates of calcium, cobalt, lead, manganese, zinc, zirconium or iron and mixtures thereof.

4. A process as claimed in Claim 1, wherein said organometallic compound is selected from acetoacetonates of manganese, cobalt, chromium, lead, calcium, cerium, iron, and mixtures thereof.

5. A process as claimed in any one of Claims 1, 3 and 4, wherein said organometallic compound catalyst is present in an amount sufficient to provide 0.02 to 0.8 percent metal based on total vehicle solids.

6. A process for preparing a crosslinked polymer comprising reacting an acetoacetic functional monomer or polymer with an a, B-unsaturated ester in the presence of a strong base catalyst effective to initiate a Michael Reaction, said a, B-unsaturated ester being formed by reacting a crotonic, maleic or itaconic acid with a polyhydroxy or epoxy functional monomer or polymer, or a mixture thereof.

7. A process for preparing a crosslinked polymer comprising reacting trimethylolpropane triacetoacetate with an a, B-unsaturated ester in the presence of a strong base catalyst effective to initiate a Michael Reaction, said a, B-unsaturated ester being formed by reacting acrylic acid with glycidyl methacrylate, butylacrylate, styrene and methyl methacrylate.

8. A process for preparing a crosslinked polymer comprising reacting a polyacetoacetic functional monomer or polymer with a poly a, B-unsaturated ester in the presence of an organometallic compound, said poly a, B-unsaturated ester being the ester of crotonic, acrylic, methacrylic, maleic or itaconic acid with a polyhydroxy or epoxy functional monomer or polymer.

9. A process for preparing a crosslinked polymer comprising reacting a polyacetoacetic functional monomer or polymer with a poly a, B-unsaturated ester in the presence of a metallic compound, said poly

a, B-unsaturated ester being the ester of crotonic, acrylic, methacrylic, maleic or itaconic acid with a polyhydroxy or epoxy functional monomer or polymer.

10. A process as claimed in Claim 9, wherein said metallic compound is a manganese compound.

11. A process as claimed in any one of the preceding claims, wherein said alkyl monofunctional acetoacetate is methyl or ethyl acetoacetate.

12. A process as claimed in any one of the preceding claims, wherein said polyhydroxy functional monomer or polyhydroxy functional polymer is selected from 1,6-hexanediol, diethylene glycol, 1,4-butanediol, neopentyl glycol, ethylene glycol, cyclohexane-dimethanol, trimethylol propane, trimethylol ethane, glycerine, epoxy resins, epoxy esters, oil free polyester resins, alkyd resins, acrylic resins and styrene/allyl alcohol copolymers, and mixtures thereof.

13. A process as claimed in any one of the preceding claims, wherein said poly a,B-unsaturated ester is selected from 1,6-hexanediol, diacrylate, trimethylolpropane triacrylate, trimethylolpropane trimethacrylate and trimethylolpropane tricinnamate and mixtures thereof.

14. A process as claimed in any one of the preceding claims, wherein said poly a,B-unsaturated ester is selected from maleic acid modified acrylic and polyester resins; itaconic modified acrylic and polyester resins; acrylate, methacrylate, and crotonate modified acrylic, polyester and alkyd resins; and mixtures thereof.

15. A process as claimed in any one of the preceding claims, wherein carbon black particles are added in an amount sufficient to render the final crosslinked polymer electroconductive.

16. A process as claimed in any one of the preceding claims, wherein the ratio of the said polyacetoacetic functional monomer or polymer to said poly, a, B-unsaturated ester ranges from about 0.50:1.50 to 1.50:0.50.

17. A process as claimed in any one of the preceding claims, wherein said polyacetoacetic functional monomer or polymer is mixed with said poly a, B-unsaturated ester in the copresence of a pot life extending agent selected from methyl ethyl ketoxime or butryaldoxime, said pot life extending agent being present in an amount ranging from 0.05 to 0.50 percent based on total vehicle solids.

18. A crosslinked polymer obtainable by reaction of a polyacetoacetic functional monomer or polymer with a poly a, B-unsaturated ester in a process as defined in any one of the preceding claims.

19. The use of a coating of a crosslinked polymer as claimed in Claim 18.